(19) Europäisches Patentamt
European Patent Office
Office européen des brevets

(11) **EP 4 730 431 A1**

(12) **EUROPEAN PATENT APPLICATION**
published in accordance with Art. 153(4) EPC

(43) Date of publication:
**22.04.2026 Bulletin 2026/17**

(21) Application number: **24880163.1**

(22) Date of filing: **18.10.2024**

(51) International Patent Classification (IPC):
$H01M\ 4/38\ ^{(2006.01)}$    $H01M\ 4/48\ ^{(2010.01)}$
$H01M\ 4/134\ ^{(2010.01)}$    $H01M\ 4/62\ ^{(2006.01)}$
$H01M\ 10/052\ ^{(2010.01)}$    $H01M\ 4/587\ ^{(2010.01)}$
$H01M\ 10/0525\ ^{(2010.01)}$    $H01M\ 4/02\ ^{(2006.01)}$

(52) Cooperative Patent Classification (CPC):
H01M 4/02; H01M 4/134; H01M 4/38; H01M 4/48;
H01M 4/587; H01M 4/62; H01M 10/052;
H01M 10/0525; Y02E 60/10

(86) International application number:
**PCT/KR2024/015832**

(87) International publication number:
**WO 2025/084826 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.10.2023 KR 20230141157
17.10.2024 KR 20240141728**

(71) Applicant: **LG Energy Solution, Ltd.
Seoul 07335 (KR)**

(72) Inventors:
• **LEE, Jieun
  Daejeon 34122 (KR)**
• **LEE, Jaewook
  Daejeon 34122 (KR)**
• **KWON, Yohan
  Daejeon 34122 (KR)**

(74) Representative: **Hoffmann Eitle
Patent- und Rechtsanwälte PartmbB
Arabellastraße 30
81925 München (DE)**

(54) **ANODE ACTIVE MATERIAL, LITHIUM SECONDARY BATTERY ANODE COMPRISING SAME, AND LITHIUM SECONDARY BATTERY COMPRISING ANODE**

(57)    The present application relates to a negative electrode active material, a negative electrode for a lithium secondary battery, a method for manufacturing a negative electrode for a lithium secondary battery, and a lithium secondary battery including a negative electrode.

[Figure 1]

**Description**

[Technical Field]

This application claims priority to and the benefit of Korean Patent Application No. 10-2023-0141157 filed in the Korean Intellectual Property Office on October 20, 2023, the entire contents of which are incorporated herein by reference.
The present application relates to a negative electrode active material, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
At present, a secondary battery is a representative example of an electrochemical device that uses such electrochemical energy, and the specified range of use thereof tends to be gradually expanding.
Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.
In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.
In particular, due to the demand for high-density energy batteries in recent years, research is being actively conducted on methods to increase a capacity by using together a silicon-based compound, such as Si/C and SiOx, having a capacity 10 times or more than that of a graphite-based material, as a negative electrode active material. However, compared with graphite, which is typically used, a silicon-based compound that is a high-capacity material has a large capacity but undergoes rapid volume expansion during charging, thereby disconnecting a conductive path to degrade battery characteristics.
Accordingly, in order to solve problems occurring when the silicon-based compound is used as the negative electrode active material, methods of suppressing the volume expansion itself, such as a method of adjusting a driving potential, a method of additionally further coating a thin film on an active material layer, and a method of adjusting a particle diameter of a silicon-based compound, or various methods for preventing a conductive path from being disconnected have been discussed. However, such methods may rather deteriorate the performance of a battery, and thus, the application thereof is limited, so that there is still a limitation in commercializing the manufacture of a battery including a negative electrode with a high content of a silicon-based compound.
Furthermore, when manufacturing a negative electrode using a silicon-based active material, it is important for a negative electrode pore structure to be simple, and increasing the particle size of the included silicon-based active material is known to be advantageous for this purpose. However, silicon-based active materials undergo significant swelling during charging/discharging due to their characteristics, and it has been confirmed through research that as the particle size increases, the displacement caused by volume changes becomes larger, and the contact surface with the negative electrode current collector layer decreases, resulting in electrode detachment.
In order to overcome the above problems, when silicon-based active materials with small particle sizes are applied, it was confirmed that the problem of electrode detachment can be resolved, but the reaction becomes concentrated on the electrode surface due to the small particle size, resulting in problems with the long-term lifespan.
Therefore, there is a need for research on a silicon-based active material layer that can simplify a negative electrode pore structure, prevent damage to a conductive path caused by volume expansion of the silicon-based compound, and maximize life characteristics even when the silicon-based compound is used as an active material in order to improve capacity performance.

Prior Art Document

Japanese Patent Application Publication No. 2009-080971

[Detailed Description of the Invention]

[Technical Problem]

As described above, silicon-based active materials have excellent capacity characteristics and, therefore, are being discussed for application as negative electrodes. However, the use thereof is limited due to the complex negative electrode pore structure caused by the size of the silicon-based active material itself and the problems such as volume expansion during charging and discharging. However, it was confirmed that, even when the silicon-based active material is applied to the negative electrode, the negative electrode pore structure can be simplified, the electrode detachment caused during charging and discharging can be prevented, and the life characteristics can be secured by adjusting a median particle size (D50) of the silicon-based active material and mixing the silicon-based active material with the adjusted median particle size at a specific ratio.

Accordingly, the present application has been made in an effort to provide a negative electrode active material having the above characteristics, a negative electrode for a lithium secondary battery, and a lithium secondary battery including a negative electrode.

[Technical Solution]

An exemplary embodiment of the present specification provides a negative electrode active material including a silicon-based active material, in which the silicon-based active material includes a first silicon-based active material with an average particle diameter (D50) of 2 $\mu$m or greater and 5 $\mu$m or less and a second silicon-based active material with an average particle diameter (D50) of 10 $\mu$m or greater and 20 $\mu$m or less, and a weight ratio of the first silicon-based active material to the second silicon-based active material is 20:80 to 80:20.

Another exemplary embodiment provides a negative electrode for a lithium secondary battery, including: a negative electrode current collector layer; and a negative electrode active material layer provided on one surface or both surfaces of the negative electrode current collector layer, in which the negative electrode active material layer includes a negative electrode active material layer composition including the negative electrode active material according to the present application, a negative electrode conductive material, and a negative electrode binder.

Still another exemplary embodiment provides a lithium secondary battery including: a positive electrode; the negative electrode for a lithium secondary battery according to the present application; a separator provided between the positive electrode and the negative electrode; and an electrolyte.

[Advantageous Effects]

The negative active material according to an exemplary embodiment of the present invention uses a silicon-based active material, which is a high-capacity material, in order to fabricate a high-capacity battery. In this case, the silicon-based active material is arranged with the average particle diameter (D50) adjusted, in which the silicon-based active material includes the first silicon-based active material with an average particle diameter (D50) of 2 $\mu$m or greater and 5 $\mu$m or less and the second silicon-based active material with an average particle diameter (D50) of 10 $\mu$m or greater and 20 $\mu$m or less, and the weight ratio of the first silicon-based active material to the second silicon-based active material is 20:80 to 80:20.

That is, the first silicon-based active material with a smaller average particle diameter and the second silicon-based active material with a larger average particle diameter are mixed at a specific ratio, and in particular, the ratio between the active materials with different average particle diameters is adjusted to 20% or greater. When adjusted as described above, it is possible to reduce the volume expansion of the active material even during charging and discharging, thereby preventing the electrode detachment, simplifying the electrode pore structure, and therefore, reducing the negative electrode resistance.

As such, the present invention adjusts the ratio in a negative electrode active material layer according to the average particle diameters of the silicon-based active materials. With the aforementioned features, the present invention can maintain the high capacity characteristics, which are the advantages of a negative electrode including the silicon-based active material, while preventing the electrode detachment and an increase in resistance, thereby enhancing the life characteristics.

[Brief Description of Drawings]

FIG. 1 is a view showing a stack structure of a negative electrode for a lithium secondary battery according to an exemplary embodiment of the present application.

FIG. 2 is a view showing a stack structure of a lithium secondary battery according to an exemplary embodiment of the present application.

<Explanation of Reference Numerals and Symbols>

10:      negative electrode current collector layer
20:      negative electrode active material layer
30:      separator
40:      positive electrode active material layer
50:      positive electrode current collector layer
100:     negative electrode for lithium secondary battery
200:     positive electrode for lithium secondary battery

[Best Mode]

Before describing the present invention, some terms are first defined.
When one part "includes", "comprises" or "has" one constituent element in the present specification, unless otherwise specifically described, this does not mean that another constituent element is excluded, but means that another constituent element may be further included.
In the present specification, 'p to q' means a range of 'p or more and q or less'.
In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.
In the present specification, "Dn" refers to a particle diameter distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the particle diameter distribution can be determined using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.
In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.
In the present specification, it is understood that the term 'polymer' is used in a broad sense including a copolymer unless otherwise specified as 'a homopolymer'.
In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, the molecular weight refers to a weight average molecular weight unless particularly described otherwise.
Hereinafter, exemplary embodiments of the present invention will be described in detail with reference to the drawings so that one skilled in the art can readily implement the present invention. However, the present invention may be implemented in various different forms, and is not limited to the following descriptions.
The negative active material according to an exemplary embodiment of the present invention uses a silicon-based active material, which is a high-capacity material, in order to fabricate a high-capacity battery. In this case, the silicon-based active material is arranged with the average particle diameter (D50) adjusted, and the silicon-based active material includes a first silicon-based active material with an average particle diameter (D50) of 2 $\mu$m or greater and 5 $\mu$m or less and a second silicon-based active material having an average particle diameter (D50) of 10 $\mu$m or greater and 20 $\mu$m or less, and a weight ration of the first silicon-based active material to the second silicon-based active material is 20:80 to 80:20.
The present invention adjusts the ratio in a negative electrode active material layer according to the average particle diameters of the silicon-based active materials. With the aforementioned features, the present invention is to maintain the high capacity characteristics, which are the advantages of a negative electrode including the silicon-based active material, while preventing the electrode detachment, thereby enhancing the life characteristics.

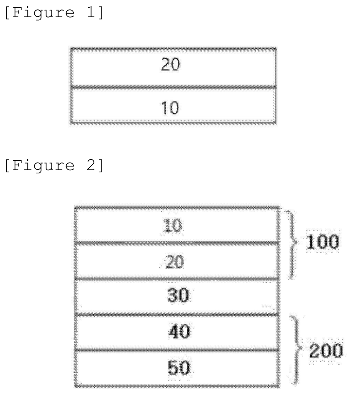

FIG. 1 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface of the negative electrode current collector layer, but the negative electrode active material layer may be formed on both surfaces of the negative electrode current collector layer.

In an exemplary embodiment of the present application, there is provided a negative electrode for a lithium secondary battery in which the first silicon-based active material and the second silicon-based active material include one or more selected from the group consisting of $SiO_x$ (x=0), $SiO_x$ (0 < x < 2), SiC, and a Si alloy.

In an exemplary embodiment of the present application, the first silicon-based active material may include one or more selected from the group consisting of $SiO_x$ (x=0) and $SiO_x$ (0 < x < 2), and the SiOx (x=0) may be included in an amount of 70 parts by weight or more based on 100 parts by weight of the first silicon-based active material.

In an exemplary embodiment of the present application, the first silicon-based active material may include $SiO_x$ (x=0), and may include 70 parts by weight or more of the $SiO_x$ (x=0) based on 100 parts by weight of the first silicon-based active material.

In another exemplary embodiment, the $SiO_x$ (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less, based on 100 parts by weight of the first silicon-based active material.

In an exemplary embodiment of the present application, the first silicon-based negative electrode active material may use, in particular, pure silicon (Si) as the silicon-based active material. Using pure silicon (Si) particles as the silicon-based active material may mean that, based on 100 parts by weight of the total first silicon-based active material as described above, pure silicon-based particles ($SiO_x$ (x=0)) that are not combined with other particles or elements are included within the specified range.

In an exemplary embodiment of the present application, the first silicon-based active material may be made of silicon-based particles having 100 parts by weight of $SiO_x$ (x=0).

In an exemplary embodiment of the present application, the second silicon-based active material may include one or more selected from the group consisting of $SiO_x$ (x=0) and $SiO_x$ (0 < x < 2), and the SiOx (x=0) may be included in an amount of 70 parts by weight or more based on 100 parts by weight of the second silicon-based active material.

In an exemplary embodiment of the present application, the second silicon-based active material may include $SiO_x$ (x=0), and may include 70 parts by weight or more of the $SiO_x$ (x=0) based on 100 parts by weight of the second silicon-based active material.

In another exemplary embodiment, the $SiO_x$ (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less, based on 100 parts by weight of the second silicon-based active material.

In an exemplary embodiment of the present application, the second silicon-based negative electrode active material may use, in particular, pure silicon (Si) as the silicon-based active material. Using pure silicon (Si) particles as the silicon-based active material may mean that, based on 100 parts by weight of the total second silicon-based active material as described above, pure silicon-based particles ($SiO_x$ (x=0)) that are not combined with other particles or elements are included within the specified range.

In an exemplary embodiment of the present application, the second silicon-based active material may be made of silicon-based particles having 100 parts by weight of $SiO_x$ (x=0).

The capacity of the silicon-based active material is significantly higher than that of a graphite-based active material that is typically used, so that there have been more attempts to apply the same. However, the volume expansion rate of the silicon-based active material during charging and discharging is high, so that, for example, only a small amount thereof is mixed and used with a graphite-based active material.

Therefore, the present invention resolves the existing problems by adjusting the ratio according to the average particle diameters of the silicon-based active material itself, rather than adjusting compositions of a conductive material and a binder in order to address the above-described problems, while using only a silicon-based active material as a negative electrode active material in order to improve capacity performance.

In an exemplary embodiment of the present application, the silicon-based active material includes silicon-based particles having a particle diameter distribution of 0.01 μm or greater and 30 μm or less.

The fact that the silicon-based active material includes silicon-based particles with a particle diameter distribution of 0.01 μm or greater and 30 μm or less means that it includes a plurality of individual silicon-based particles with particle diameters within the specified range, and in this case, the number of silicon-based particles included is not limited.

The silicon-based active material includes silicon-based particles having a particle diameter distribution of 0.01 $\mu$m or greater and 30 $\mu$m or less, and the silicon-based active material includes a first silicon-based active material having an average particle diameter (D50) of 2 $\mu$m or greater and 5 $\mu$m or less and a second silicon-based active material having an average particle diameter (D50) of 10 $\mu$m or greater and 20 $\mu$m or less.

That is, the silicon-based active material may include various silicon-based particles having a particle diameter distribution of 0.01 $\mu$m or greater and 30 $\mu$m or less, and in this case, the first silicon-based active material may include silicon-based particles having an average particle diameter (D50) of 2 $\mu$m or greater and 5 $\mu$m or less, and the second silicon-based active material may include silicon-based particles having an average particle diameter (D50) of 10 $\mu$m or greater and 20 $\mu$m or less.

The particle diameter of the silicon-based active material can be expressed by its diameter when the particle is spherical. Even if the particle has a shape other than a spherical shape, the particle diameter can be measured in comparison to the spherical case. In general, the particle diameters of individual silicon-based particles can each be measured by a method commonly adopted in the art.

The present application provides the negative electrode active material in which the silicon-based active material includes silicon-based particles having a particle diameter distribution of 0.01 $\mu$m or greater and 30 $\mu$m or less, and particles with a size of less than 2 $\mu$m are included in an amount of 5 parts by weight or less based on 100 parts by weight of the silicon-based active material.

Specifically, the particles with a size of less than 2 $\mu$m may be included in an amount of 5 parts by weight or less, 3 parts by weight or less, and specifically 1 part by weight or less, and 0 part by weight or more, or 0.1 part by weight or more based on 100 parts by weight of the silicon-based active material.

As described above, the silicon-based active material according to the present application does not contain fine particles. If fine particles are included, simplification of the negative electrode pore structure cannot be achieved, which becomes a factor contributing to an increase in resistance. Therefore, the silicon-based active material satisfies the aforementioned range.

In the exemplary embodiment of the present application, the silicon-based active material generally has a characteristic BET specific surface area. The BET specific surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon-based active material is preferably a spherical or fragment-shaped particle. Alternatively, but less preferably, the silicon-based active material may also have a fibrous structure or be present in the form of a silicon-containing film or coating.

In an exemplary embodiment of the present application, the negative electrode active material may be included in an amount of 60 parts by weight or more based on 100 parts by weight of the negative electrode composition.

In another exemplary embodiment, the negative electrode active material may be included in an amount of 60 parts by weight or more, preferably 65 parts by weight or more, and more preferably 70 parts by weight or more, and an amount of 95 parts by weight or less, preferably 90 parts by weight or less, and more preferably 85 parts by weight or less, based on 100 parts by weight of the negative electrode composition.

The negative electrode for a lithium secondary battery according to the present invention distributes the silicon-based active material with a specific average particle diameter, which can control the volume expansion rate during charging and discharging even when the silicon-based active material having a significantly high capacity is used within the specified range, in the negative electrode. Accordingly, even when the silicon-based active material is included within the specified range, the negative electrode has excellent output characteristics in charging and discharging without degrading the performance of the negative electrode.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9. In the present application, the sphericity (circularity) is determined by Formula 1 below, in which A is an area and P is a boundary line.

$$[\text{Formula 1}]$$

$$4\pi A/P^2$$

In an exemplary embodiment of the present application, there is provided the negative electrode active material in which the weight ratio of the first silicon-based active material to the second silicon-based active material is 20:80 to 80:20.

In another exemplary embodiment, the weight ratio of the first silicon-based active material to the second silicon-based active material may be 20 to 80:80 to 20, preferably 30 to 70:70 to 30, and more preferably 35 to 65:65 to 35.

The silicon-based active material of the present application includes the first silicon-based active material having an average particle diameter (D50) of 2 $\mu$m or greater and 5 $\mu$m or less and the second silicon-based active material having an average particle diameter (D50) of 10 $\mu$m or greater and 20 $\mu$m or less, and can satisfy the weight ratio described above.

That is, when the first silicon-based active material is included in an amount of 40 parts by weight based on 100 parts by weight of the silicon-based active material, the second silicon-based active material may be included in an amount of 60 parts by weight.

When manufacturing a negative electrode using a silicon-based active material, it is important for a negative electrode pore structure to be simple, and increasing the particle size of the included silicon-based active material is known to be advantageous for this purpose. However, silicon-based active materials undergo significant swelling during charging/discharging due to their characteristics, and it has been confirmed that as the particle size increases, the displacement caused by volume changes becomes larger, and the contact surface with the negative electrode current collector layer decreases, resulting in electrode detachment. In order to overcome the above problems, when silicon-based active materials with small particle sizes are applied, it was confirmed that the problem of electrode detachment can be resolved, but the reaction becomes concentrated on the electrode surface due to the small particle size, resulting in problems with the long-term life.

To further resolve the above problems, the arrangement of silicon-based active materials having different average particle diameters (D50) was adjusted by arranging a silicon-based active material with a smaller average particle size on the negative electrode current collector layer side and a silicon-based active material with a larger average particle size on the surface. This approach aimed to secure capacity characteristics while enhancing life characteristics.

However, even with such an approach, coating through the arrangement is difficult due to limitations in loading, and problems such as delamination at the boundary between silicon-based active materials having different average particle diameters also occur.

Accordingly, the present application includes the first silicon-based active material having an average particle diameter (D50) of 2 $\mu$m or greater and 5 $\mu$m or less and the second silicon-based active material having an average particle diameter (D50) of 10 $\mu$m or greater and 20 $\mu$m or less, and adjusts the ratio thereof, thereby securing the life characteristics and improving a clogging phenomenon of surface particles.

That is, the first silicon-based active material and the second silicon-based active material having different particle diameters are mixed and applied, and especially when the ratio of the silicon-based active materials having different particle sizes is adjusted to 20% or greater based on the entire negative electrode active material layer, the life characteristics can be secured and the clogging phenomenon of surface particles can also be improved.

In an exemplary embodiment of the present application, there is provided the negative electrode for a lithium secondary battery in which the average particle diameter (D50) of the first silicon-based active material is 2 $\mu$m or greater and 5 $\mu$m or less, and the average particle diameter (D50) of the second silicon-based active material is 10 $\mu$m or greater and 20 $\mu$m or less.

In the present application, the average particle diameter (D50) of the first silicon-based active material may be 2 $\mu$m or greater and 5 $\mu$m or less, preferably 2 $\mu$m or greater and 4.5 $\mu$m or less, and more preferably 2.5 $\mu$m or greater and 4 $\mu$m or less.

In the present application, the average particle diameter (D50) of the second silicon-based active material may be 10 $\mu$m or greater and 20 $\mu$m or less, preferably 10 $\mu$m or greater and 19 $\mu$m or less, and more preferably 12 $\mu$m or greater and 18 $\mu$m or less.

The present application provides a negative electrode for a lithium secondary battery, including: a negative electrode current collector layer; and a negative electrode active material layer provided on one surface or both surfaces of the negative electrode current collector layer, in which the negative electrode active material layer includes a negative electrode active material layer composition including the negative electrode active material according to the present application, a negative electrode conductive material, and a negative electrode binder.

In the related art, it is general to use only graphite-based compounds as the negative electrode active material. However, in recent years, as the demand for high-capacity batteries is increasing, attempts to mix and use silicon-based compounds are increasing in order to increase capacity. However, for silicon-based compounds, even if the characteristics of the silicon-based active material itself are adjusted as described above, the volume rapidly expands during charging and discharging, thereby damaging the conductive path formed in the negative electrode active material layer.

Therefore, in an exemplary embodiment of the present application, the negative electrode conductive material may include one or more selected from the group consisting of a point-like conductive material, a planar conductive material, and a linear conductive material.

In an exemplary embodiment of the present application, the point-like conductive material refers to a spherical or point-like conductive material that may be used for improving conductivity of the negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less. In an exemplary embodiment of the present application, a content of the functional group (volatile matter) of the point-like conductive material may fall within a range of 0.01% or more and 1% or less, preferably 0.01% or more and 0.3% or less, and more preferably 0.01% or more and 0.1% or less.

In particular, when the content of the functional group of the point-like conductive material falls within the specified range, a functional group is present on a surface of the point-like conductive material, so that the point-like conductive material can be smoothly dispersed in a solvent when water is used as the solvent.

In the manufacture of the point-like conductive material, a high functional group content may mean that a large amount of foreign materials is present, and a low functional group content may mean that more heat treatments have been conducted, and the point-like conductive material according to the present application may satisfy the functional group content range by partially heat-treating the point-like conductive material in order to satisfy the functional group content within the specified range.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the negative electrode conductive material may include a planar conductive material.

The planar conductive material refers to a conductive material that improves conductivity by increasing surface contact between silicon particles in the negative electrode and at the same time serves to suppress disconnection of the conductive path due to the volume expansion. The planar conductive material may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 4 to 5 $\mu$m. When the specified range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, there is provided the negative electrode composition in which the planar conductive material has a D10 of 0.5 $\mu$m or greater and 1.5 $\mu$m or less, a D50 of 4.0 $\mu$m or greater and 5.0 $\mu$m or less, and a D90 of 7.0 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 $m^2$/g or greater.

In another exemplary embodiment, the planar conductive material may have a BET specific surface area of 5 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may fall within a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may fall within a range of 5 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, there is provided the negative electrode composition in which the negative electrode conductive material includes a linear conductive material and the linear conductive material is carbon nanotubes.

In an exemplary embodiment of the present application, the negative electrode conductive material may include a planar conductive material and a linear conductive material.

In an exemplary embodiment of the present application, the negative electrode conductive material may include a planar conductive material and a linear conductive material, and a ratio of the planar conductive material to the linear conductive material may satisfy 1:0.01 to 1:0.1.

In an exemplary embodiment of the present application, there is provided the negative electrode composition in which the negative electrode conductive material is included in an amount of 5 parts by weight or more and 40 parts by weight or less based on 100 parts by weight of the negative electrode composition.

In another exemplary embodiment, the negative electrode conductive material may be included in an amount of 5 parts by weight or more and 40 parts by weight or less, preferably 10 parts by weight or more and 30 parts by weight or less, and more preferably 15 parts by weight or more and 25 parts by weight or less, based on 100 parts by weight of the negative electrode composition.

In an exemplary embodiment of the present application, as the negative electrode conductive material includes the planar conductive material and the linear conductive material and the composition and ratio described above are satisfied, respectively, the service life characteristics of an existing lithium secondary battery are not significantly affected, and the number of points where the battery can be charged and discharged increases, so that output characteristics are excellent at a high Crate.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the existing negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, has a point-like shape, and a BET specific surface area thereof may fall within a range of 0.1 m$^2$/g or greater and 4.5 m$^2$/g or less. In addition, plate-like graphite, which is a planar conductive material, has a planar shape, and a BET specific surface area thereof may be 5 m$^2$/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, or 10 parts by weight or more based on 100 parts by weight of the negative electrode composition.

In an exemplary embodiment of the present application, there is provided the negative electrode for a lithium secondary battery in which the negative electrode active material layer is a single layer negative electrode active material layer or a multilayer negative electrode active material layer.

That is, the negative electrode for a lithium secondary battery according to the present application may include a single layer negative electrode active material layer or a double layer negative electrode active material layer, and the ratio of silicon-based active materials having different particle diameters included in the entire negative electrode active material layer described above may be applied in the same manner, except that the negative electrode active material layer is a single layer or a multilayer.

In an exemplary embodiment of the present application, there is provided the negative electrode for a lithium secondary battery in which a thickness of the negative electrode current collector layer is 1 $\mu$m or greater and 100 $\mu$m or less, and a thickness of the negative electrode active material layer is 10 $\mu$m or greater and 250 $\mu$m or less.

However, the thickness may be variously modified depending on a type and a use of negative electrode used, and is not limited thereto.

In an exemplary embodiment of the present application, the negative electrode current collector layer generally has a thickness of 1 $\mu$m to 100 um. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, a porosity of the negative electrode active material layer may fall within a range of 10% or greater and 60% or less.

In another exemplary embodiment, the porosity of the negative electrode active material layer may fall within a range of 10% or greater and 60% or less, preferably 20% or greater and 50% or less, and more preferably 30% or greater and 45% or less.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stacked structure with a separator 30 interposed therebetween.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1l+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_3$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder, together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration pathway for lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of the claims included herein.

**<Preparation Example>**

**<Preparation Example 1> Negative Electrode of SLC**

A composition for a negative electrode active material layer was prepared using Si (first silicon-based active material, second a silicon-based active material) as a silicon-based active material, a first conductive material, a second conductive material, and polyacrylamide as a binder in a weight ratio of 80:9.6:0.4:10, and added to distilled water as a solvent for forming a negative electrode slurry, resulting in preparation of a negative electrode slurry.

The first conductive material was plate-like graphite (specific surface area: 17 $m^2$/g, average particle diameter (D50): 3.5 $\mu$m), and the second conductive material was SWCNTs.

As a mixing method, the first conductive agent, the binder, and water were dispersed at 1500 rpm for 30 minutes using a homo mixer, the silicon-based active material was added to the dispersion, the resulting mixture was dispersed at 2500 rpm for 30 minutes, and then the second conductive material was added to the dispersion, which was then dispersed at 2500 rpm for 10 minutes. Then, the slurry for a negative electrode active material layer was coated on both surfaces of a copper current collector (thickness: 15 $\mu$m) serving as a negative electrode current collector with a loading amount of 20 mg/25cm$^2$, and then dried.

In this case, the average particle diameters and parts by weight of the first silicon-based active material and the second silicon-based active material included in the negative electrode slurry are shown in Table 1 below.

[Table 1]

| | Average particle diameter of first silicon-based active material ($\mu$m) | Average particle diameter of second silicon-based active material ($\mu$m) | First silicon-based active material: second silicon-based active material (parts by weight) |
|---|---|---|---|
| Example 1 | 3.5 | 15 | 50:50 |
| Example 2 | 3.5 | 15 | 45:55 |

(continued)

|  | Average particle diameter of first silicon-based active material (μm) | Average particle diameter of second silicon-based active material (μm) | First silicon-based active material: second silicon-based active material (parts by weight) |
|---|---|---|---|
| Example 3 | 3.5 | 15 | 40:60 |
| Example 4 | 3.5 | 15 | 55:45 |
| Example 5 | 3.5 | 15 | 60:40 |
| Example 6 | 2.5 | 15 | 50:50 |
| Example 7 | 2.0 | 15 | 50:50 |
| Example 8 | 4.0 | 15 | 50:50 |
| Example 9 | 3.5 | 14 | 50:50 |
| Example 10 | 3.5 | 13 | 50:50 |
| Example 11 | 3.5 | 12 | 50:50 |
| Example 12 | 3.5 | 17 | 50:50 |
| Example 13 | 3.5 | 18 | 50:50 |
| Comparative Example 1 | 3.5 | - | 100:0 |
| Comparative Example 2 | - | 15 | 0:100 |
| Comparative Example 3 | 3.5 | 15 | 15:85 |
| Comparative Example 4 | 3.5 | 15 | 85:15 |
| Comparative Example 5 | 6 | 7 | 50:50 |

## <Preparation Example 2> Negative Electrode of DLC

A composition for a first negative electrode active material layer was prepared using Si (first silicon-based active material, second a silicon-based active material) as a silicon-based active material, a first conductive material, a second conductive material, and polyacrylamide as a binder in a weight ratio of 80:9.6:0.4:10, and added to distilled water as a solvent for forming a negative electrode slurry, resulting in preparation of a negative electrode slurry.

The first conductive material was plate-like graphite (specific surface area: 17 m$^2$/g, average particle diameter (D50): 3.5 μm), and the second conductive material was SWCNTs.

Then, the slurry for a first negative electrode active material layer was coated on both surfaces of a copper current collector (thickness: 15 μm) serving as a negative electrode current collector with a loading amount of 8 mg/25cm$^2$, and the slurry for a second negative electrode active material layer was coated with a loading amount of 12 mg/25cm$^2$, resulting in preparation of an electrode.

In this case, the average particle diameters and parts by weight of the first silicon-based active material and the second silicon-based active material included in the negative electrode slurry are shown in Table 2 below.

[Table 2]

|  | Average particle diameter of first silicon-based active material (μm) | Average particle diameter of second silicon-based active material (μm) | First silicon-based active material: second silicon-based active material (parts by weight) in first negative electrode active material layer composition | First silicon-based active material: second silicon-based active material (parts by weight) in second negative electrode active material layer composition | First silicon-based active material: second silicon-based active material (parts by weight) in entire negative electrode active material layer |
|---|---|---|---|---|---|
| Example 14 | 3.5 | 15 | 10:90 | 40:60 | 35:65 |
| Example 15 | 3.5 | 15 | 90:10 | 60:40 | 63:37 |

(continued)

| | Average particle diameter of first silicon-based active material (μm) | Average particle diameter of second silicon-based active material (μm) | First silicon-based active material: second silicon-based active material (parts by weight) in first negative electrode active material layer composition | First silicon-based active material: second silicon-based active material (parts by weight) in second negative electrode active material layer composition | First silicon-based active material: second silicon-based active material (parts by weight) in entire negative electrode active material layer |
|---|---|---|---|---|---|
| Comparative Example 6 | 3.5 | 15 | 10:90 | 20:80 | 14:86 |
| Comparative Example 7 | 3.5 | 15 | 90:10 | 80:20 | 85:15 |

### <Preparation of Secondary Battery>

A positive electrode slurry (solid concentration: 78 wt%) was prepared by adding $LiNi_{0.6}Co_{0.2}Mn_{0.2}O_2$ (average particle diameter (D50): 15 μm) as a positive electrode active material, carbon black (product name: Super C65, manufacturer: Timcal), and polyvinylidene fluoride (PVdF) as a binder to N-methyl-2-pyrrolidone (NMP) as a solvent for forming a positive electrode slurry in a weight ratio of 97:1.5:1.5.

The positive electrode slurry was coated on both surfaces of an aluminum current collector (thickness: 12 μm) serving as a positive electrode current collector with a loading amount of 537 mg/25 $cm^2$, which was then roll-pressed and dried in a vacuum oven at 130°C for 10 hours to form a positive electrode active material layer (thickness: 65 μm), resulting in preparation of a positive electrode (thickness of positive electrode: 77 μm, porosity: 26%).

A lithium secondary battery was prepared by interposing a polyethylene separator between the positive electrode and the negative electrode of the Examples and the Comparative Examples and injecting an electrolyte.

The electrolyte was obtained by adding vinylene carbonate to an organic solvent, in which fluoroethylene carbonate (FEC) and diethyl carbonate (DMC) were mixed at a volume ratio of 10:90, in an amount of 3 wt% based on a total weight of the electrolyte and adding $LiPF_6$ as a lithium salt to a concentration of 1M.

### <Experimental Example>

### Experimental Example 1: Cycle Life Data

For the secondary batteries including the negative electrodes manufactured in the Examples and Comparative Examples, the life and capacity retention rate were evaluated using an electrochemical charging and discharging device. The in-situ cycle test was conducted on the secondary battery at 4.2-3.0 V 1 C/0.5 C, and during the test, 0.33 C/0.33 C charging/discharging (4.2-3.0 V) was performed every 50 cycles to measure the capacity retention rate.

life retention rate (%) = {(discharge capacity in the Nth cycle)/(discharge capacity in the first cycle)} $\times$ 100

[Table 3]

| | Life retention rate (%) after 200 cycles |
|---|---|
| Example 1 | 96.77 |
| Example 2 | 81.86 |
| Example 3 | 82.12 |
| Example 4 | 81.65 |
| Example 5 | 81.93 |
| Example 6 | 92.93 |
| Example 7 | 91.15 |

(continued)

|  | Life retention rate (%) after 200 cycles |
|---|---|
| Example 8 | 93.12 |
| Example 9 | 96.77 |
| Example 10 | 81.57 |
| Example 11 | 83.65 |
| Example 12 | 79.89 |
| Example 13 | 74.53 |
| Example 14 | 79.79 |
| Example 15 | 81.93 |
| Comparative Example 1 | 72.59 |
| Comparative Example 2 | 47.47 |
| Comparative Example 3 | 72.88 |
| Comparative Example 4 | 67.30 |
| Comparative Example 5 | 75.76 |
| Comparative Example 6 | 52.13 |
| Comparative Example 7 | 77.89 |

## Experimental Example 2: Cycle Resistance Increase Rate

In the test in Experimental Example 1, the capacity retention rates were measured by charging/discharging (4.2-3.0V) the batteries at 0.33C/0.33C every 50 cycles, and then the resistance increase rates were compared and analyzed by discharging the batteries with a pulse of 2.5C at SOC50 to measure the resistance.

For the evaluation of the resistance increase rate measurement, data at 200 cycles was calculated each, and the results are shown in Table 4 below.

[Table 4]

|  | Resistance increase rate (%) after 200 cycles (3.0 to 4.2 V range 1C/0.5C) |
|---|---|
| Example 1 | 1.35 |
| Example 2 | 1.79 |
| Example 3 | 2.31 |
| Example 4 | 1.82 |
| Example 5 | 2.29 |
| Example 6 | 1.62 |
| Example 7 | 1.70 |
| Example 8 | 1.45 |
| Example 9 | 1.35 |
| Example 10 | 1.41 |
| Example 11 | 1.39 |
| Example 12 | 1.54 |
| Example 13 | 1.58 |
| Example 14 | 2.78 |
| Example 15 | 2.55 |
| Comparative Example 1 | 2.69 |

(continued)

|  | Resistance increase rate (%) after 200 cycles (3.0 to 4.2 V range 1C/0.5C) |
|---|---|
| Comparative Example 2 | 3.79 |
| Comparative Example 3 | 3.12 |
| Comparative Example 4 | 3.28 |
| Comparative Example 5 | 2.21 |
| Comparative Example 6 | 3.51 |
| Comparative Example 7 | 3.13 |

As can be seen in Tables 3 and 4 above, it was confirmed that, when the first silicon-based active material with a smaller average particle diameter and the second silicon-based active material with a larger average particle diameter are mixed at a specific ratio, and in particular, the ratio between the active materials with different average particle diameters is adjusted as described above, it is possible to reduce the volume expansion of the active material even during charging and discharging, thereby preventing the electrode detachment, simplifying the electrode pore structure, and therefore, reducing the negative electrode resistance.

Comparative Example 1 corresponds to a case where a silicon-based active material having a small particle size was included alone, and Comparative Example 2 corresponds to a case where a silicon-based active material having a large particle size is included alone. In Comparative Example 1, it was confirmed that better cycle performance was exhibited compared to Comparative Example 2, but after a certain number of cycles, the reaction was concentrated on the surface, causing sudden death, and as in Comparative Example 2, detachment occurred from the surface of the current collector due to large volume expansion of the Si active material from the initial cycle, resulting in a deterioration of cycle performance.

Comparative Examples 3 and 4 corresponds to cases where a silicon-based active material with a larger particle diameter and a silicon-based active material with a smaller particle diameter are applied as in the present invention, but the ratio falls outside the range of the present invention. Specifically, it was confirmed that when the active material having a smaller particle diameter, such as in Comparative Example 3, falls below the range of the present application, low cycle performance similar to that of Comparative Example 2 having 100% of the active material with a large particle size is exhibited, and when the active material having a larger particle diameter, such as in Comparative Example 4, falls below the range of the present application, performance similar to that of Comparative Example 1 is exhibited.

In Comparative Example 5 where the weight ratio satisfies the range of the present application, but the particle diameters fall outside the range of the present application, the performance deteriorates due to large volume expansion, regardless of the ratio, and furthermore, when the active material with a smaller particle diameter falls outside the range of the present application, there is no difference in initial life performance, but the point at which sudden death occurs is advanced.

For reference, Examples 14 and 15 and Comparative Examples 6 and 7 have a double layer active material structure (DLD), and the same principles as the aforementioned Examples and Comparative Examples are applied.

**Claims**

1. A negative electrode active material comprising a silicon-based active material,

   wherein the silicon-based active material comprises a first silicon-based active material having an average particle diameter (D50) of 2 $\mu$m or greater and 5 $\mu$m or less and a second silicon-based active material having an average particle diameter (D50) of 10 $\mu$m or greater and 20 $\mu$m or less, and
   wherein a weight ratio of the first silicon-based active material to the second silicon-based active material is 20:80 to 80:20.

2. The negative electrode active material of claim 1, wherein the weight ratio of the first silicon-based active material to the second silicon-based active material is 35:65 to 65:35.

3. The negative electrode active material of claim 1, wherein the silicon-based active material comprises silicon-based particles having a particle diameter distribution of 0.01 $\mu$m to 30 $\mu$m, and
   wherein particles with a size of less than 2 $\mu$m are included in an amount of 5 parts by weight or less based on 100 parts by weight of the silicon-based active material.

4. The negative electrode active material of claim 1, wherein the first silicon-based active material and the second silicon-based active material comprise one or more selected from the group consisting of $SiO_x$ (x=0), $SiO_x$ (0 < x < 2), SiC, and a Si alloy.

5. The negative electrode active material of claim 1, wherein the first silicon-based active material comprises one or more selected from the group consisting of $SiO_x$ (x=0) and $SiO_x$ (0 < x < 2), and comprises 70 parts by weight or more of the $SiO_x$ (x=0) based on 100 parts by weight of the first silicon-based active material.

6. The negative electrode active material of claim 1, wherein the second silicon-based active material comprises one or more selected from the group consisting of $SiO_x$ (x=0) and $SiO_x$ (0 < x < 2), and comprises 70 parts by weight or more of the $SiO_x$ (x=0) based on 100 parts by weight of the second silicon-based active material.

7. A negative electrode for a lithium secondary battery, comprising:

   a negative electrode current collector layer; and
   a negative electrode active material layer provided on one surface or both surfaces of the negative electrode current collector layer,
   wherein the negative active material layer comprises a negative active material layer composition comprising the negative active material of any one of claims 1 to 6, a negative conductive material, and a negative electrode binder.

8. The negative electrode for a lithium secondary battery of claim 7, wherein the negative electrode active material is included in an amount of 60 parts by weight or more based on 100 parts by weight of the negative electrode active material layer composition.

9. The negative electrode for a lithium secondary battery of claim 7, wherein the negative electrode conductive material comprises a planar conductive material and a linear conductive material.

10. The negative electrode for a lithium secondary battery of claim 7, wherein the negative electrode active material layer is a single layer negative electrode active material layer or a multilayer negative electrode active material layer.

11. The negative electrode for a lithium secondary battery of claim 7, wherein a thickness of the negative electrode current collector layer is 1 um or greater and 100 $\mu$m or less, and
    wherein a thickness of the negative electrode active material layer is 10 $\mu$m or greater and 250 $\mu$m or less.

12. A lithium secondary battery comprising:

    a positive electrode;
    the negative electrode for a lithium secondary battery of claim 7;
    a separator provided between the positive electrode and the negative electrode; and
    an electrolyte.

[Figure 1]

| 20 |
|---|
| 10 |

[Figure 2]

| 10 | ⎫ |
|---|---|
| 20 | ⎬ 100 |
| 30 | |
| 40 | ⎫ 200 |
| 50 | ⎭ |

## INTERNATIONAL SEARCH REPORT

| | International application No. |
|---|---|
| | **PCT/KR2024/015832** |

| A. | CLASSIFICATION OF SUBJECT MATTER |
|---|---|

**H01M 4/38**(2006.01)i; **H01M 4/48**(2010.01)i; **H01M 4/134**(2010.01)i; **H01M 4/62**(2006.01)i; **H01M 10/052**(2010.01)i; **H01M 4/587**(2010.01)i; **H01M 10/0525**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/38(2006.01); H01M 10/052(2010.01); H01M 10/0525(2010.01); H01M 4/131(2010.01); H01M 4/133(2010.01); H01M 4/134(2010.01); H01M 4/1395(2010.01); H01M 4/36(2006.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극 활물질(negative electrode active material), 실리콘계 활물질(silicon-based active material), 평균 입경(average particle size), 도전재(conductive agent)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115763773 A (SHANGHAI XUANYI NEW ENERGY DEVELOPMENT CO., LTD.) 07 March 2023 (2023-03-07) See claims 1-5 and 7; paragraphs [0019]-[0025], [0029]-[0031], [0048] and [0049]; example 1; and figure 1. | 1-6 |
| Y | | 7-12 |
| Y | KR 10-1711985 B1 (SAMSUNG SDI CO., LTD.) 06 March 2017 (2017-03-06) See claims 1, 4 and 14; and paragraphs [0054], [0055] and [0065]. | 7-12 |
| Y | KR 10-2023-0095798 A (LG ENERGY SOLUTION, LTD.) 29 June 2023 (2023-06-29) See claims 1, 3, 4, 6, 12 and 15; and paragraphs [0063] and [0075]. | 9 |
| X | US 2022-0037643 A1 (PANASONIC INTELLECTUAL PROPERTY MANAGEMENT CO., LTD.) 03 February 2022 (2022-02-03) See claims 1-6; and paragraphs [0046], [0049]-[0055] and [0059]. | 1-6 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 February 2025** | **11 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/015832** |

**C.   DOCUMENTS CONSIDERED TO BE RELEVANT**

| Category* | Citation of document, with indication, where appropriate, of the relevant passages | Relevant to claim No. |
| --- | --- | --- |
| A | US 2019-0123337 A1 (NEC CORPORATION) 25 April 2019 (2019-04-25)<br>See entire document. | 1-12 |

Form PCT/ISA/210 (second sheet) (July 2022)

## INTERNATIONAL SEARCH REPORT
### Information on patent family members

International application No.

**PCT/KR2024/015832**

| Patent document cited in search report | | | Publication date (day/month/year) | Patent family member(s) | | | Publication date (day/month/year) |
|---|---|---|---|---|---|---|---|
| CN | 115763773 | A | 07 March 2023 | None | | | |
| KR | 10-1711985 | B1 | 06 March 2017 | CN | 102956877 | A | 06 March 2013 |
| | | | | CN | 102956877 | B | 18 May 2016 |
| | | | | EP | 2559660 | A1 | 20 February 2013 |
| | | | | EP | 2559660 | B1 | 03 August 2016 |
| | | | | JP | 2013-041826 | A | 28 February 2013 |
| | | | | JP | 6366160 | B2 | 01 August 2018 |
| | | | | KR | 10-2013-0018498 | A | 25 February 2013 |
| | | | | US | 2013-0045419 | A1 | 21 February 2013 |
| KR | 10-2023-0095798 | A | 29 June 2023 | CA | 3229755 | A1 | 29 June 2023 |
| | | | | CN | 117716533 | A | 15 March 2024 |
| | | | | EP | 4376122 | A1 | 29 May 2024 |
| | | | | JP | 2024-529005 | A | 01 August 2024 |
| | | | | KR | 10-2729985 | B1 | 14 November 2024 |
| | | | | US | 2023-0197940 | A1 | 22 June 2023 |
| | | | | WO | 2023-120966 | A1 | 29 June 2023 |
| US | 2022-0037643 | A1 | 03 February 2022 | CN | 112753113 | A | 04 May 2021 |
| | | | | CN | 112753113 | B | 10 May 2024 |
| | | | | EP | 3859828 | A1 | 04 August 2021 |
| | | | | EP | 3859828 | B1 | 05 April 2023 |
| | | | | JP | 2021-066576 | A1 | 30 August 2021 |
| | | | | JP | 7236658 | B2 | 10 March 2023 |
| | | | | WO | 2020-066576 | A1 | 02 April 2020 |
| US | 2019-0123337 | A1 | 25 April 2019 | CN | 108701812 | A | 23 October 2018 |
| | | | | CN | 108701812 | B | 23 September 2022 |
| | | | | JP | 2019-179429 | A1 | 21 February 2019 |
| | | | | JP | 7070400 | B2 | 18 May 2022 |
| | | | | WO | 2017-179429 | A1 | 19 October 2017 |

Form PCT/ISA/210 (patent family annex) (July 2022)

**EP 4 730 431 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230141157
- JP 2009080971 A